# EUROPEAN PATENT SPECIFICATION

(11) **EP 3 543 653 B1**
(45) Date of publication and mention of the grant of the patent: **13.09.2023**
(21) Application number: 17870780.8
(22) Date of filing: 28.07.2017
(51) Int. Cl.: G01C 21/20, G01C 21/36, B62D 15/02, G01C 21/12

(54) **NAVIGATION METHOD BASED ON ALONG-THE-WAY REFERENCE OBJECT MATCHING**
NAVIGATIONSVERFAHREN AUF BASIS DER ANPASSUNG VON REFERENZOBJEKTEN ENTLANG DES WEGES
PROCÉDÉ DE NAVIGATION BASÉ SUR LA MISE EN CORRESPONDANCE DE L'OBJET DE RÉFÉRENCE EN COURS DE ROUTE

(30) Priority: 21.11.2016 CN 201611049020
(43) Date of publication of application: 25.09.2019
(73) Proprietor: NIO (Anhui) Holding Co., Ltd., Hefei City, Anhui Province (CN)
(72) Inventor: MA, Xiang, AnTing Town, Jiading District, Shanghai 201804 (CN)
(74) Representative: Vossius & Partner Patentanwälte Rechtsanwälte mbB
(86) International application number: PCT/CN2017/095038
(87) International publication number: WO 2018/090667

(56) References cited:
- CN-A- 101 784 868
- CN-A- 103 440 782
- CN-A- 104 616 520
- CN-A- 104 655 125
- CN-A- 105 004 340
- CN-A- 105 424 055
- CN-A- 105 928 532
- DE-A1-102013 215 960
- KR-A- 20160 089 580
- CHEN ZHENXIANG ET AL: "QR code location based reverse car-searching route recommendation model", 2014 IEEE INTERNATIONAL CONFERENCE ON VEHICULAR ELECTRONICS AND SAFETY, IEEE, 16 December 2014 (2014-12-16), pages 73-77, XP032749134, DOI: 10.1109/ICVES.2014.7063727 [retrieved on 2015-03-18]
- GROH BENJAMIN H ET AL: "Advanced real-time indoor parking localization based on semi-static objects", 17TH INTERNATIONAL CONFERENCE ON INFORMATION FUSION (FUSION), INTERNATIONAL SOCIETY OF INFORMATION FUSION, 7 July 2014 (2014-07-07), pages 1-7, XP032654053, [retrieved on 2014-10-03]

## Description

### Technical Field

The invention relates to a navigation method and in particular to a navigation method based on wayside reference object matching.

### Background Art

In the prior art, in-vehicle navigation has been widely used. Generally, the in-vehicle navigation realizes real-time locating of a vehicle based on the GPS satellite positioning system; and guides a driver or passenger in real time with regard to the driving direction and route selection according to a calculated route to the destination based on the correlation between the real-time position and the map. However, for vehicles driving in an indoor parking lot, in-vehicle navigation equipment (a navigator or mobile phone) cannot receive GPS signals and thus fails to fulfill fine-grained navigation tasks inside the parking lot. In other words, how to realize navigation in places that are not covered with GPS or BeiDou navigation signals is a problem that needs to be solved currently.

In addition, in valet charging services, the efficiency of a service delivery person in finding the user's vehicle is one of the key factors that determine the time consumption of the service. When a vehicle is parked indoors (such as in an indoor parking lot) without GPS coverage, how the service person efficiently finds the vehicle parked by the user is a difficulty in the operation of the valet charging service. Therefore, if navigation can be realized in places that are not covered with GPS or BeiDou navigation signals, the efficiency of the service person in finding the user's vehicle will be greatly improved. KR 2016 0089580 A discloses a solution in which a user is aided in finding a parked vehicle by associating a photographed license place with a vehicle parking location.

Based on this, the field needs a new navigation method to solve the above problems.

### Summary of the Invention

In order to solve the above-mentioned problem in the prior art, that is, to realize navigation in places that are not covered with GPS or BeiDou navigation signals, the invention provides a navigation method based on wayside reference object matching, as defined by the features of claim 1. Further embodiments are defined by the features of the dependent claims.

In the technical solution of the invention, for example, in a parking lot that is not covered by GPS or BeiDou navigation, it is impossible to use GPS or BeiDou navigation to directly navigate a vehicle searching person to a destination, in which case, by acquiring navigation information based on at least one wayside reference object in a first trip (e.g., a trip of a vehicle to the destination) and searching in a second trip (e.g., a trip for a vehicle searching person to find a vehicle) for a base point matched with the at least one wayside reference object, navigation for the second trip is realized by inertial navigation. That is to say, the navigation for a vehicle searching person is realized in a parking lot without GPS or BeiDou navigation coverage, thereby improving the vehicle searching person's efficiency in finding the vehicle. In addition, when the invention is used in a parking lot, vehicles (license plate numbers) in the parking lot can be taken as a reference object, so adequate reference objects can be acquired in the application scenario of a parking lot, thereby greatly improving the navigation accuracy.

### Brief Description of the Drawings

Fig. 1 is a basic schematic diagram of a navigation method based on wayside reference object matching of the invention;
Fig. 2 is a basic flow chart of the navigation method based on wayside reference object matching of the invention; and
Fig. 3 is a basic flow chart of one of the embodiments of the invention.

### Detailed Description of Embodiments

Preferred embodiments of the invention are described below with reference to the accompanying drawings. It should be understood by those skilled in the art that these embodiments are only for explaining the technical principles of the invention and are not intended to limit the scope of protection of the invention. For example, although the present application is described in connection with the scenario where a service person of a valet charging service searches for a vehicle in an underground parking lot, it is obvious that the technical solution of the invention is not intended to be limited to such application, and the technical solution of the invention can be flexibly applied to other navigation scenarios where there is no access to navigation signals by those skilled in the art without departing from the technical principle of the invention.

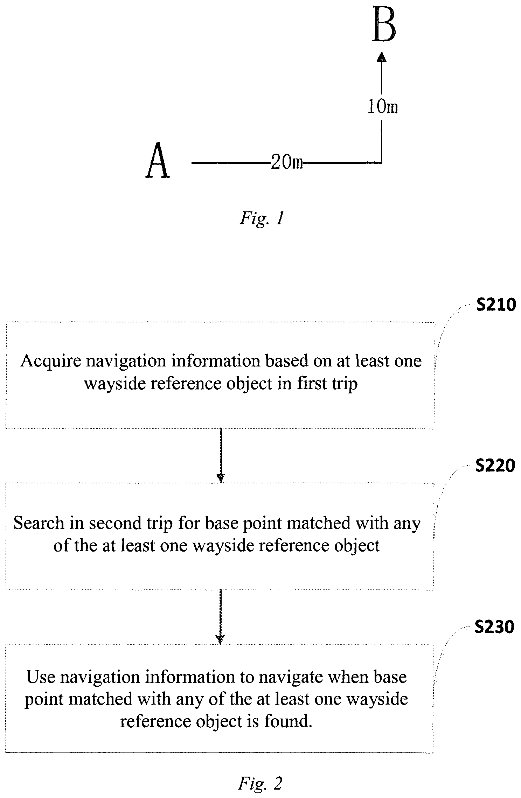

The basic navigation principle of the invention is, with a preset reference point, calculating the position of a subject relative to the reference point based on the displacement of the subject relative to the reference point. For example, as shown in Fig. 1, a reference point A is preset in advance, the position of the subject is B, and the position B relative to the reference point A moves eastward (rightward in Fig. 1) by 20 meters and then northward (upward in Fig. 1) by 10 meters. In this case, when the subject at B needs to be found, the reference point A can be found first, then the subject can be found by moving eastward by 20 meters and then northward by 10 meters from the reference point A.

In a practical application scenario, taking a vehicle as an example, after the vehicle sets off from the reference point A, the driving path data such as the distance traveled in each straight line and the steering angle along the route need to be recorded until the vehicle travels to the position B. Thus, an owner of the vehicle can send a vehicle searching person the route information from the reference point A to the position B recorded during the driving of the vehicle. After the vehicle searching person finds the reference point A, the vehicle located at the position B can be found according to the route information sent by the vehicle owner along the same route as with the route information.

Based on the above principle, as shown in Fig. 2, the navigation method based on wayside reference object matching of the invention mainly comprises the following steps: at S210, acquiring navigation information based on at least one wayside reference object in a first trip; at S220, searching in a second trip for a base point matched with any of the at least one wayside reference object; and at S230, using the navigation information to navigate when the base point matched with any of the at least one wayside reference object is found.

Through the navigation method of the invention, vehicles parked in underground parking lots can be found quickly. In this embodiment, an example of finding a vehicle parked in an underground parking lot will be described. At S 110, the first trip is the trip of the vehicle to the destination (i.e., the parking space where the vehicle is finally parked); and at S120, the second trip is the trip of a subject required to reach the destination (in this embodiment, the subject refers to a vehicle searching person, specifically, a service person for valet charging). At S130, in the process of vehicle searching by the vehicle searching person (i.e., in the second trip), the vehicle searching person finds a reference matched with the wayside reference object acquired by the vehicle in the first trip, preferably the same reference object as the wayside reference object acquired by the vehicle in the first trip, and the vehicle searching person is navigated according to the navigation information of the reference object. In other words, the most efficient path for the second trip is the same path as the first trip. In addition, the navigation information based on the wayside reference objects may comprise the position of each wayside reference object and a first navigation path between the wayside reference objects, and may also comprise a second navigation path from each of the wayside reference objects to the destination. More specifically, the first navigation path can particularly comprise a first adjacency navigation path between the adjacent wayside reference objects and a first non-adjacency navigation path between the nonadjacent wayside reference objects. As an example, when using the navigation information to navigate, the vehicle searching person may first use the first adjacency navigation path for navigation, and when a certain wayside reference object in the first trip cannot be found, for example, a vehicle is driven away, the second navigation path and/or the first non-adjacency navigation path may be alternatively used for navigation, which is described in detail hereinafter.

Due to the problem of data precision, the further the position B from the reference point A, the greater the error of the calculated path, that is, the greater the deviation of the second trip from the first trip. Therefore, the more wayside reference objects acquired in the first trip, the less the deviation of the second trip from the first trip. In this embodiment, since there are adequate vehicles parked in the parking lot, in order to obtain enough wayside reference objects, the vehicles parked in the parking lot (specifically, the license plate number of each vehicle) can be selected as the wayside reference objects.

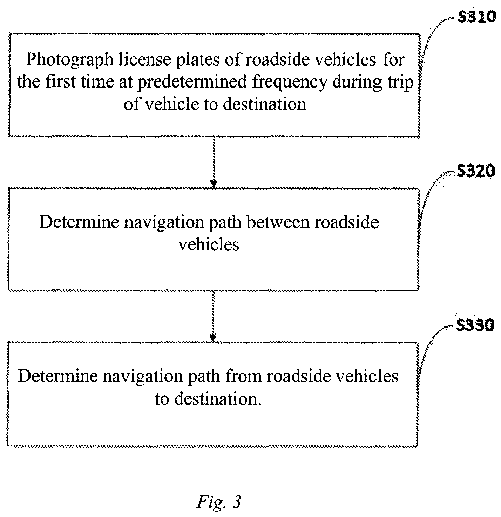

In this embodiment, as shown in Fig. 3, the step of acquiring navigation information based on license plate numbers in the first trip comprises the following substeps:

At S310, during the trip of the vehicle to the destination, the license plates of the roadside vehicles are photographed for the first time at a predetermined frequency. Specifically, the predetermined frequency can be rationally selected according to the actual size of the parking lot (for example, photographing every 5 s, 10 s, 15 s, etc.). Moreover, the license plates of the roadside vehicles can be photographed by a vehicle-mounted camera. In this embodiment, the captured images of the license plates can be processed and the license plate number of each license plate can be acquired for distinguishing different vehicles. Because every license plate number is unique (each license plate number corresponds to one vehicle), the license plate numbers can be used as reference points in the driving path of the vehicle and recorded as license plate number C1, license plate number C2, license plate number C3, ......, and license plate number Cn. At S320, a navigation path between the roadside vehicles is determined. At S330, a navigation path from each of the roadside vehicles to the destination is determined.

For example, at S320, position information of each roadside vehicle may be selectively determined before determining a navigation path between the roadside vehicles. Specifically, since each license plate number corresponds to one vehicle, the license plate number can be regarded as a vehicle. Therefore, the position information of the roadside vehicles can be regarded as information of the relative positions between license plate number C1, license plate number C2, license plate number C3, ..... ., and license plate number Cn, for example, the relative position of license plate number C2 with respect to license plate number C1 (for example, C2 is located 20 meters east and 10 meters north of C1), the relative position of license plate number C3 with respect to license plate number C2, and so on, up to the relative position of license plate number Cn with respect to license plate number Cn-1. Accordingly, at S320, the navigation path between the roadside vehicles comprises two types of navigation path, that is, a first adjacency navigation path between the adjacent reference objects and a first non-adjacency navigation path between the nonadjacent reference objects. More specifically, the first adjacency navigation path comprises, for example, a navigation path between license plate number C2 and license plate number C1, a navigation path between license plate number C3 and license plate number C2, and so on, up to a navigation path between license plate number Cn and license plate number Cn-1; and the first non-adjacency navigation path may be a path between any nonadjacent reference objects, such as a navigation path between license plate number C3 and license plate number C1, a navigation path between license plate number C6 and license plate number C3, etc. Of course, the navigation path between the roadside vehicles may alternatively comprise only the navigation path between the adjacent reference objects. At S330, the navigation path from the roadside vehicles to the destination, i.e., the second navigation path, comprises a navigation path from license plate number C1 to the destination, a navigation path from license plate number C2 to the destination, ......, a navigation path from license plate number Cn to the destination, etc.

In this embodiment, after the vehicle owner parks the vehicle at the destination (the final parking space), since there is no network in the underground parking lot, an on-board computer can first send the navigation information to a mobile phone of the vehicle owner or other fellow passengers through an in-vehicle network. After the vehicle owner or passengers leave the parking lot, the first navigation path and the second navigation path acquired in the first trip are uploaded through the mobile phone to a server or other relay equipment which sends the first navigation path and the second navigation path to the vehicle searching person. Alternatively, after parking the vehicle at the destination, the vehicle owner or other fellow passengers may directly send the first navigation path and the second navigation path acquired in the first trip to the vehicle searching person. In the second trip, the vehicle searching person searches for the same license plate number as the reference point license plate number C1, license plate number C2, license plate number C3, ......, license plate number Cn. When the same license plate number is found, the vehicle can be found in the second trip according to the first navigation path and/or the second navigation path, and the most efficient path of the second trip is the same path as the first trip.

For example, in the second trip, the vehicle searching person photographs the license plates of the roadside vehicles, in which case the license plate of every roadside vehicle can be photographed, for example, images of the license plates of all vehicles along the route can be captured by a self-contained camera, then the captured images of the license plates are processed, and the license plate number Tn of each license plate is acquired. The acquired license plate number Tn is compared with the license plate number C1, license plate number C2, license plate number C3, ......, and license plate number Cn acquired during the photographing for the first time, so as to find the same license plate number as any of license plate number C1, license plate number C2, license plate number C3, ......, and license plate number Cn. When the same license plate number is found for the first time, for example, when license plate number T1 same as license plate number C1 is found, the vehicle searching person is navigated to the position of license plate number C2 along the path from license plate number C1 to license plate number C2, and then license plate number T2 same as license plate number C2 is found, the vehicle searching person is thus navigated to the position of license plate number C3 along the path from license plate number C2 to license plate number C3, and so on, until the vehicle searching person is navigated to the position of the destination according to the first navigation path.

For example, when the vehicle searching person is navigated to the position of license plate number C2 along the path from license plate number C1 to license plate number C2, and the vehicle searching person does not find license plate number T2 same as license plate number C2, the first adjacency navigation path can be switched to the second navigation path. That is, when license plate number T2 same as license plate number C2 is not found, the vehicle searching person drives according to the navigation path from license plate number C1 to the destination until the same license plate number as another of license plate number C1, license plate number C2, license plate number C3, ......, and license plate number Cn is found during driving, switches to the first adjacency navigation path again, and follows the above-mentioned method until being navigated to the position of the destination. Alternatively, when the vehicle searching person is navigated to the position of license plate number C2 and does not find license plate number T2 same as license plate number C2, the first adjacency navigation path can be switched to the first non-adjacency navigation path. For example, when the license plate number T2 same as the license plate number C2 is not found, the vehicle searching person can follow the navigation path from license plate number C1 to license plate number C3 (or license plate numbers C4, C5, etc.). Correspondingly, when license plate number T3 is present, it is possible to switch back to the first adjacency navigation path again, that is, resume the navigation by following the path from license plate number C3 to license plate number C4, unless another license plate number later cannot be matched again.

As an example, in order to help a vehicle searching person to quickly find a reference point, an initial reference point may be set at the entrance of the parking lot, that is, the initial position of the first trip is the entrance of the parking lot, and then navigation information based on a plurality of license plate numbers may be acquired at a predetermined frequency in the first trip. During vehicle searching, the initial position of the second trip is also the entrance of the parking lot, the vehicle searching person searches in the second trip for the license plate numbers acquired in the first trip, and then drives according to the first navigation path or the second navigation path to finally reach the destination.

It should be noted that in this embodiment, the navigation method is used to search for a vehicle in a parking lot. In most cases, the interval between a user parking a vehicle and a vehicle searching person searching for the vehicle will not be very long. Therefore, the probability of data mismatch caused by a vehicle serving as a reference object being retrieved is not very high, thus ensuring the continuity of navigation in the vehicle searching process. In addition, even if the reference objects cannot be matched in the vehicle searching process, navigation can be resumed by switching the navigation path (for example, switching from the first adjacency navigation path to the first non-adjacency navigation path or the second navigation path), thus further ensuring the continuity of navigation.

The navigation method can be used for valet charging services, that is, a user of an electric vehicle acquires navigation information for a plurality of wayside reference objects during parking, a service person who delivers the valet charging service searches for a reference point matched with the wayside reference objects, and navigates by using the navigation information until reaching the destination and finding the electric vehicle parked by the user.

In addition, it should be noted that when the navigation information for the wayside reference objects is uploaded to the server, if there is access to network signals in the parking lot, the vehicle directly uploads the navigation information for the wayside reference objects to the server; and if there is no access to network signals in the parking lot, the vehicle transmits the navigation information for the wayside reference objects to the user's mobile phone through the in-vehicle network, and then the user uploads the navigation information for the wayside reference objects to the server or directly sends it to the service person who delivers the valet charging service through the mobile phone at a place where there is access to network signals.

Heretofore, the technical solutions of the invention have been described with reference to the preferred embodiments shown in the accompanying drawings; however, those skilled in the art can readily understand that the protection scope of the invention is obviously not limited to these particular embodiments. Without departing from the principle of the invention, a person skilled in the art may make equivalent modifications or substitutions to related technical features, and the technical solutions after these modifications or substitutions shall fall within the scope of protection of the invention, insofar as they fall within the scope of the claims.

## Claims

1. A navigation method based on wayside reference object matching, the method comprising the steps of:
acquiring navigation information based on a plurality of captured images of reference license plates of roadside vehicles in a first trip of a vehicle to a parking space;
searching in a second trip of a subject required to reach the parking space for license plate numbers matched with any of the reference license plate numbers acquired in the first trip; and
using the navigation information to navigate when license plate numbers matched with any of the reference license plate numbers acquired in the first trip are found,
wherein the navigation information comprises a position of each of the plurality of reference license plates and a first navigation path between the plurality of reference license plates.

2. The navigation method based on wayside reference object matching according to claim 1, wherein the first navigation path comprises a first adjacency navigation path between the adjacent reference license plates and a first non-adjacency navigation path between the nonadjacent reference license plates, whereby the non-adjacency navigation path is a path between non-adjacent reference license plates in the case where adjacent reference license plates, registered during the first trip, cannot be found.

3. The navigation method based on wayside reference object matching according to claim 2, wherein the navigation information also comprises a second navigation path which is formed between each of the plurality of reference license plates and the parking space.

4. The navigation method based on wayside reference object matching according to claim 3, wherein the step of searching in a second trip of a subject required to reach the parking space for license plate numbers matched with any of the reference license plate numbers acquired in the first trip further comprises: searching in the second trip for the same license plate as any of the reference license plates.

5. The navigation method based on wayside reference object matching according to claim 4, wherein the step of using the navigation information to navigate further comprises: using the first adjacency navigation path to navigate.

6. The navigation method based on wayside reference object matching according to claim 5, wherein the step of using the navigation information to navigate also comprises: using the second navigation path and/or the first non-adjacency navigation path to navigate, if the license plate number matched with a certain reference license plate number in the first trip cannot be found in the second trip during navigation with the first adjacency navigation path.

7. The navigation method based on wayside reference object matching according to claim 1, wherein the step of acquiring navigation information based on a plurality of captured images of reference license plates of roadside vehicles in a first trip of a vehicle to a parking space comprises:
during the first trip of the vehicle to the parking space, photographing the license plates of the roadside vehicles for the first time at a predetermined frequency; and/or
determining a navigation path between the roadside vehicles; and/or
determining a navigation path from the roadside vehicle to the parking space.

8. The navigation method based on wayside reference object matching according to claim 7, wherein the step of searching in a second trip of a subject required to reach the parking space for license plate numbers matched with any of the reference license plate numbers acquired in the first trip comprises:
in the process of the subject required to reach the parking space heading to the parking space, photographing the license plates of the roadside vehicles for the second time; and
searching the license plates obtained during the photographing for the second time for the same license plates as the reference license plates obtained during the photographing for the first time.

9. The navigation method based on wayside reference object matching according to claim 8, wherein the vehicle is an electric vehicle, and the subject is a service person who delivers a valet charging service.

## Patentansprüche

1. Navigationsverfahren auf Basis eines Abgleichens mit Referenzobjekten entlang des Weges, wobei das Verfahren die folgenden Schritte umfasst:
Erfassen von Navigationsinformationen auf Basis einer Mehrzahl von erfassten Bildern von Referenznummernschildern von Fahrzeugen an der Straße auf einer ersten Fahrt eines Fahrzeugs zu einem Parkplatz;
Suchen nach Nummernschildnummern, die mit den auf der ersten Fahrt erfassten Referenznummernschildnummern abgeglichen sind, auf einer zweiten Fahrt einer Person, die den Parkplatz erreichen soll; und
Verwenden der Navigationsinformationen zum Navigieren, wenn Nummernschildnummern, die mit den auf der ersten Fahrt erfassten Referenznummernschildnummern abgeglichen sind, gefunden werden,
wobei die Navigationsinformationen eine Position von jedem der Mehrzahl von Referenznummernschildern und einen ersten Navigationspfad zwischen der Mehrzahl von Referenznummernschildern umfassen.

2. Navigationsverfahren auf Basis eines Abgleichens mit Referenzobjekten entlang des Weges nach Anspruch 1, wobei der erste Navigationspfad einen ersten benachbarten Navigationspfad zwischen den benachbarten Referenznummernschildern und einen ersten nicht benachbarten Navigationspfad zwischen den nicht benachbarten Referenznummernschildern umfasst, wobei in dem Fall, in dem keine während der ersten Fahrt registrierte benachbarte Referenznummernschilder gefunden werden können, der nicht benachbarte Navigationspfad ein Pfad zwischen nicht benachbarten Referenznummernschildern ist.

3. Navigationsverfahren auf Basis eines Abgleichens mit Referenzobjekten entlang des Weges nach Anspruch 2, wobei die Navigationsinformationen außerdem einen zweiten Navigationspfad, der zwischen jedem der Mehrzahl von Referenznummernschildern und dem Parkplatz gebildet ist, umfassen.

4. Navigationsverfahren auf Basis eines Abgleichens mit Referenzobjekten entlang des Weges nach Anspruch 3, wobei der Schritt des Suchens nach Nummernschildnummern, die mit den auf der ersten Fahrt erfassten Referenznummernschildnummern abgeglichen sind, auf einer zweiten Fahrt einer Person, die den Parkplatz erreichen soll, ferner umfasst: Suchen nach demselben Nummernschild wie eines der Referenznummernschilder auf der zweiten Fahrt.

5. Navigationsverfahren auf Basis eines Abgleichens mit Referenzobjekten entlang des Weges nach Anspruch 4, wobei der Schritt des Verwendens der Navigationsinformationen zum Navigieren ferner umfasst: Verwenden des ersten benachbarten Navigationspfads zum Navigieren.

6. Navigationsverfahren auf Basis eines Abgleichens mit Referenzobjekten entlang des Weges nach Anspruch 5, wobei der Schritt des Verwendens der Navigationsinformationen zum Navigieren außerdem umfasst: Verwenden des zweiten Navigationspfads und/oder des ersten nicht benachbarten Navigationspfads zum Navigieren, wenn die Nummernschildnummer, die auf der ersten Fahrt mit einer bestimmten Referenznummernschildnummer abgeglichen wurde, auf der zweiten Fahrt während der Navigation mit dem ersten benachbarten Navigationspfad nicht gefunden werden kann.

7. Navigationsverfahren auf Basis eines Abgleichens mit Referenzobjekten entlang des Weges nach Anspruch 1, wobei der Schritt des Erfassens von Navigationsinformationen auf Basis einer Mehrzahl von erfassten Bildern von Referenznummernschildern von Fahrzeugen an der Straße auf einer ersten Fahrt eines Fahrzeugs zu einem Parkplatz umfasst:
Fotografieren der Nummernschilder der Fahrzeuge an der Straße während der ersten Fahrt zum Parkplatz zum ersten Mal mit einer vorbestimmten Frequenz und/oder
Bestimmen eines Navigationspfads zwischen den Fahrzeugen an der Straße und/oder
Bestimmen eines Navigationspfads vom Fahrzeug an der Straße zum Parkplatz.

8. Navigationsverfahren auf Basis eines Abgleichens mit Referenzobjekten entlang des Weges nach Anspruch 7, wobei der Schritt des Suchens nach Nummernschildnummern, die mit den auf der ersten Fahrt erfassten Referenznummernschildnummern abgeglichen sind, auf einer zweiten Fahrt einer Person, die den Parkplatz erreichen soll, umfasst:
während des Prozesses des Fahrens der Person, die den Parkplatz erreichen soll, zum Parkplatz, Fotografieren der Nummernschilder der Fahrzeuge an der Straße zum zweiten Mal und
Durchsuchen der während des Fotografierens zum zweiten Mal erhaltenen Nummernschilder nach denselben Nummernschildern wie die Referenznummernschilder, die während des Fotografierens zum ersten Mal erhalten wurden.

9. Navigationsverfahren auf Basis eines Abgleichens mit Referenzobjekten entlang des Weges nach Anspruch 8, wobei das Fahrzeug ein Elektrofahrzeug ist und die Person eine Dienstperson ist, die einen Valet-Ladedienst leistet.

## Revendications

1. Procédé de navigation basé sur une correspondance d'objets de référence en bord de route, le procédé comprenant les étapes consistant à :
acquérir des informations de navigation sur la base d'une pluralité d'images capturées de plaques d'immatriculation de référence de véhicules routiers lors d'un premier voyage d'un véhicule vers un emplacement de stationnement ;
rechercher, lors d'un second voyage qu'un sujet doit effectuer pour atteindre l'emplacement de stationnement, des numéros de plaque d'immatriculation correspondant à l'un des numéros de plaque d'immatriculation de référence acquis lors du premier voyage ; et
utiliser les informations de navigation pour naviguer lorsque des numéros de plaque d'immatriculation correspondant à l'un quelconque des numéros de plaque d'immatriculation de référence acquis lors du premier trajet sont trouvés,
les informations de navigation comprenant une position de chaque plaque d'immatriculation de la pluralité de plaques d'immatriculation de référence et un premier trajet de navigation entre la pluralité de plaques d'immatriculation de référence.

2. Procédé de navigation basé sur une correspondance d'objets de référence en bord de route selon la revendication 1, dans lequel le premier trajet de navigation comprend un premier trajet de navigation par adjacence entre les plaques d'immatriculation de référence adjacentes et un premier trajet de navigation par non-adjacence entre les plaques d'immatriculation de référence non adjacentes, le trajet de navigation par non adjacence étant un trajet entre des plaques d'immatriculation de référence non adjacentes dans le cas où des plaques d'immatriculation de référence adjacentes, enregistrées pendant le premier voyage, ne peuvent pas être trouvées.

3. Procédé de navigation basé sur une correspondance d'objets de référence en bord de route selon la revendication 2, dans lequel les informations de navigation comprennent également un second trajet de navigation qui est formé entre chaque plaque d'immatriculation de la pluralité de plaques d'immatriculation de référence et l'emplacement de stationnement.

4. Procédé de navigation basé sur une correspondance d'objets de référence en bord de route selon la revendication 3, dans lequel l'étape de recherche, lors d'un second voyage qu'un sujet doit effectuer pour atteindre l'emplacement de stationnement, de numéros de plaque d'immatriculation correspondant à l'un des numéros de plaque d'immatriculation de référence acquis lors du premier voyage, comprend en outre l'étape consistant à : rechercher, lors du second voyage, la même plaque d'immatriculation que l'une quelconque des plaques d'immatriculation de référence.

5. Procédé de navigation basé sur une correspondance d'objets de référence en bord de route selon la revendication 4, dans lequel l'étape d'utilisation des informations de navigation pour naviguer comprend en outre l'étape consistant à : utiliser le premier trajet de navigation par adjacence pour naviguer.

6. Procédé de navigation basé sur une correspondance d'objets de référence en bord de route selon la revendication 5, dans lequel l'étape d'utilisation des informations de navigation pour naviguer comprend également l'étape consistant à : utiliser le second trajet de navigation et/ou le premier trajet de navigation par non adjacence pour naviguer, si le numéro de plaque d'immatriculation correspondant à un certain numéro de plaque d'immatriculation de référence lors du premier trajet ne peut pas être trouvé lors du second trajet pendant une navigation avec le premier trajet de navigation par adjacence.

7. Procédé de navigation basé sur une correspondance d'objets de référence en bord de route selon la revendication 1, dans lequel l'étape d'acquisition d'informations de navigation sur la base d'une pluralité d'images capturées de plaques d'immatriculation de référence de véhicules routiers lors d'un premier voyage d'un véhicule vers un emplacement de stationnement comprend les étapes consistant à :
au cours du premier trajet du véhicule jusqu'à l'emplacement de stationnement, photographier les plaques d'immatriculation des véhicules routiers pour la première fois à une fréquence prédéterminée ; et/ou
déterminer un trajet de navigation entre les véhicules routiers ; et/ou
déterminer un trajet de navigation entre le véhicule routier et l'emplacement de stationnement.

8. Procédé de navigation basé sur une correspondance d'objets de référence en bord de route selon la revendication 7, dans lequel l'étape de recherche, lors d'un second voyage qu'un sujet doit effectuer pour atteindre l'emplacement de stationnement, de numéros de plaque d'immatriculation correspondant à l'un des numéros de plaque d'immatriculation de référence acquis lors du premier voyage, comprend l'étape consistant à :
lors du déplacement vers l'emplacement de stationnement que doit effectuer le sujet pour atteindre l'emplacement de stationnement, photographier les plaques d'immatriculation des véhicules routiers pour la seconde fois ; et
rechercher, parmi les plaques d'immatriculation obtenues lors de la photographie pour la seconde fois, les mêmes plaques d'immatriculation que les plaques d'immatriculation de référence obtenues lors de la photographie pour la première fois.

9. Procédé de navigation basé sur une correspondance d'objets de référence en bord de route selon la revendication 8, dans lequel le véhicule est un véhicule électrique et le sujet est une personne de service qui fournit un service de recharge de voiturier.
